# EUROPEAN PATENT SPECIFICATION

(11) **EP 3 238 392 B1**
(45) Date of publication and mention of the grant of the patent: **06.09.2023**
(21) Application number: 14909272.8
(22) Date of filing: 27.12.2014
(51) Int. Cl.: H04L 45/28, H04L 45/24

(54) **TECHNOLOGIES FOR MEDIUM GRAINED ADAPTIVE ROUTING IN HIGH-PERFORMANCE NETWORK FABRICS**
TECHNOLOGIEN ZUR MITTELKÖRNIGEN ADAPTIVEN LEITWEGLENKUNG IN HOCHLEISTUNGSFÄHIGE NETZWERKGEWEBEN
TECHNOLOGIES DESTINÉES À UN ROUTAGE ADAPTATIF À GRANULARITÉ MOYENNE DANS DES MATRICES DE RÉSEAU À HAUTE PERFORMANCE

(43) Date of publication of application: 01.11.2017
(73) Proprietor: Intel Corporation, Santa Clara, CA 95054 (US)
(72) Inventor: RIMMER, Todd M., Exton, Pennsylvania 19341 (US); WEBER, Renae M., W. St. Paul, Minnesota 55118 (US)
(74) Representative: Rummler, Felix
(86) International application number: PCT/US2014/072461
(87) International publication number: WO 2016/105446

(56) References cited:
- US-A1- 2003 195 983
- US-A1- 2009 077 268
- US-A1- 2010 182 920
- US-A1- 2014 119 193
- US-A1- 2014 211 631
- US-A1- 2014 269 325
- US-B1- 6 950 394
- US-B1- 8 761 020
- US-B2- 9 253 096

## Description

### BACKGROUND

High performance computing (HPC) clusters, cloud computing datacenters, and other large-scale computing networks may communicate over a high-speed input/output fabric such as an InfiniBand^{™} fabric. The InfiniBand^{™} architecture may transfer data using switched, point-to-point channels between endnodes. In the InfiniBand^{™} architecture, an endnode may be identified within a subnet using a 16-bit local identifier (LID). Routing in InfiniBand^{™} networks is distributed, based on forwarding tables stored in each switch. The forwarding table of an InfiniBand^{™} switch may store a single destination port per destination LID. Therefore, routing in InfiniBand^{™} may be static and deterministic.

Congestion in network communications may occur when demand for a network link exceeds available bandwidth or other network resources. In InfiniBand^{™} networks, a congestion control agent may monitor for network congestion and communicate with network hosts to reduce data injection rates for network traffic causing congestion.

US2014/0211631 relates to a method including receiving in a network switch of a communication network communication traffic that originates from a source node and arrives over a route through the communication network traversing one or more preceding network switches, for forwarding to a destination node. In response to detecting in the network switch a compromised ability to forward the communication traffic to the destination node, a notification is sent to the preceding network switches. The notification is to be consumed by the preceding network switches and requests the preceding network switches to modify the route so as not to traverse the network switch.

US2014/119193A1 relates to a method implemented by a network element. The network element receives a data packet in a data flow at an ingress port of the network element. A load sharing process is performed to select an egress port of the network element. A check is whether the selected egress port is congested. A check is made whether a time since a previous data packet in the data flow was received exceeds a threshold value. A less congested egress port is identified in the set of ports. A flow table is updated to bind the data flow to the less congested egress port and the data packet is forwarded to the less congested egress port.

US2010/182920 relates to a communication apparatus that includes an input interface to receive a flow of segmented data, and an output interface to transmit the received data from a plurality of physical links. The output interface includes storage units corresponding to the respective physical links to store transmission data. A link monitor unit observes how much data is accumulated in each storage unit. A distribution unit selects which physical link is to be used to output the received data. Based on the observations by the link monitor unit, the distribution unit changes the selection to an alternative physical link that has a larger amount of stored data than the currently selected physical link.

US2009/077268A1 relates to a low latency multicasting receive and send apparatus and method comprising low latency receive and send queues. In an InfiniBand^{®} network each destination group of nodes (recipients) is identified by a unique Global ID (GID)+Local ID (LID). Each node whose ports are part of a multicast group identify themselves via a LID which identifies participating ports. When a switch receives such a multicast packet with a multicast LID in the packet's DLID field it replicates the packet to each of the designated ports.

### SUMMARY OF THE INVENTION

The invention is defined in the claims. In the following description, any embodiment referred to and not falling within the scope of the claims is merely an example useful to the understanding of the invention.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for medium grained adaptive routing;
FIG. 2 is a simplified block diagram of at least one embodiment of various environments that may be established by the system of FIG. 1;
FIG. 3 is a simplified flow diagram of at least one embodiment of a method for medium grained adaptive routing that may be executed by a managed network device of the system of FIGS. 1 and 2; and
FIG. 4 is a schematic diagram of various data tables that may be maintained by a managed network device of FIGS. 1 and 2.

### DETAILED DESCRIPTION OF THE DRAWINGS

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

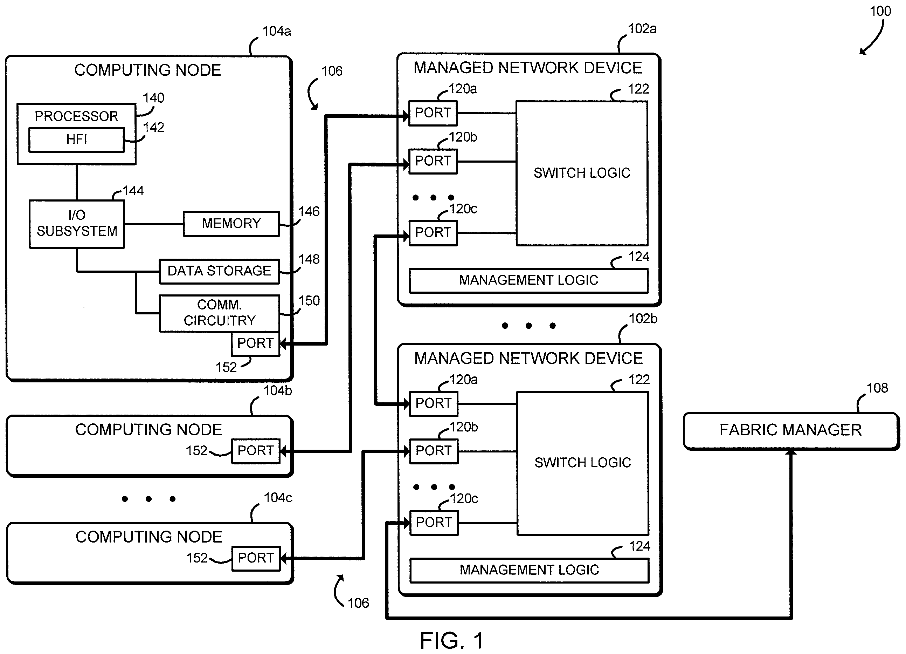

Referring now to FIG. 1, in one embodiment, a system 100 for medium grained adaptive routing includes a number of managed network devices 102 and a number of computing nodes 104 communicating via several fabric links 106. The managed network devices 102, the computing nodes 104, and other attributes of the system 100 may be managed by one or more fabric managers 108. In use, as discussed in more detail below, each computing node 104 may transmit data packets over a fabric link 106 to a managed network device 102. Each data packet may include a destination local identifier (DLID) that identifies a destination computing node 104. The managed network device 102 examines the DLID to determine whether the fabric link 106 of the statically routed destination port of the data packet is congested. Congestion typically occurs for fabric links 106 between managed network devices 102, rather than between a computing node 104 and a managed network device 102. If congested, the managed network device 102 may look up a port group for the DLID and select a new destination port of the port group. Each port group includes two or more ports of the managed network device 102, and the port groups may overlap (i.e., multiple port groups may include the same port). The fabric manager 108 may configure the port groups and port group forwarding tables of each managed network device 102 of the system 100. Thus, in the system 100, the fabric manager 108 may provide global knowledge regarding fabric topology and usage policy while real time traffic monitoring and adaptive routing is performed by each managed network device 102. Thus, adaptive routing provided by the system 100 may support scaling to large numbers of managed network devices 102. Accordingly, although illustrated as including three computing nodes 104a through 104c and two managed network devices 102a and 102b, it should be understood that the system 100 may include many more managed network devices 102 and computing nodes 104.

Each managed network device 102 may be embodied as any network device capable of forwarding or controlling fabric traffic, such as a managed switch. The illustrative managed network device 102 includes a number of fabric ports 120, a switch logic 122, and a management logic 124. Each fabric port 120 may be connected to a fabric link 106, which in turn may be connected to a remote device such as a computing node 104 or another managed network device 102. The illustrative managed network device 102 includes three fabric ports 120a through 120c; however, in other embodiments the managed network device 102 may include additional or fewer ports 120 to support a different number of fabric links 106.

The switch logic 122 may be embodied as any hardware, firmware, software, or combination thereof configured to forward data packets received on the ports 120 to appropriate destination ports 120. For example, the switch logic 122 may be embodied as a shared memory switch or a crossbar switch, and may include a scheduler, packet processing pipeline, linear forwarding tables, port group forwarding tables, port group tables, and/or any other switching logic. In some embodiments, the switch logic 122 may be embodied as one or more application-specific integrated circuits (ASICs).

The management logic 124 may be embodied as any control circuit, microprocessor, or other logic block that may be used to configure and control the managed network device 102. For example, the management logic 124 may initialize the managed network device 102 and its components, control the configuration of the managed network device 102 and its components, provide a testing interface to the managed network device 102, or provide other management functions. The management logic 124 may be configured by changing the values of a number of data tables including a port group forwarding table and/or a port group table. The fabric manager 108 may communicate with the management logic 124 using an in-band management interface by transmitting specially formatted management datagrams (MADs) over the fabric links 106. Additionally or alternatively, the management logic 124 may communicate with the fabric manager 108 over a management interface such as one or more PCI Express host interfaces, a test interface, or one or more low-speed interfaces such as an I2C interface, a JTAG interface, an SPI interface, an MDIO interface, an LED interface, or a GPIO interface.

Each computing node 104 may be embodied as any type of computation or computer device capable of performing the functions described herein, including, without limitation, a computer, a server, a rack-mounted server, a blade server, a network appliance, a web appliance, a multiprocessor system, a distributed computing system, a processor-based system, a mobile computing device, and/or a consumer electronic device. As shown in FIG. 1, each computing node 104 illustratively includes a processor 140, an input/output subsystem 144, a memory 146, a data storage device 148, and communication circuitry 150. Of course, the computing node 104 may include other or additional components, such as those commonly found in a computer (e.g., various input/output devices), in other embodiments. Additionally, in some embodiments, one or more of the illustrative components may be incorporated in, or otherwise form a portion of, another component. For example, the memory 146, or portions thereof, may be incorporated in the processor 140 in some embodiments.

The processor 140 may be embodied as any type of processor capable of performing the functions described herein. For example, the processor 140 may be embodied as a single or multi-core processor(s), digital signal processor, microcontroller, or other processor or processing/controlling circuit. The processor 140 further includes a host fabric interface 142. The host fabric interface 142 may be embodied as any communication interface, such as a network interface controller, communication circuit, device, or collection thereof, capable of enabling communications between the processor 140 and other remote computing nodes 104 and/or other remote devices over the fabric links 106. The host fabric interface 142 may be configured to use any one or more communication technology and associated protocols (e.g., the Intel^{®} Omni-Path Architecture) to effect such communication. Although illustrated as including a single processor 140, it should be understood that each computing node 104 may include multiple processors 140, and each processor 140 may include an integrated host fabric interface 142.

Similarly, the memory 146 may be embodied as any type of volatile or non-volatile memory or data storage capable of performing the functions described herein. In operation, the memory 146 may store various data and software used during operation of the computing node 104 such as operating systems, applications, programs, libraries, and drivers. The memory 146 is communicatively coupled to the processor 140 via the I/O subsystem 144, which may be embodied as circuitry and/or components to facilitate input/output operations with the processor 140, the memory 146, and other components of the computing node 104. For example, the I/O subsystem 144 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 144 may form a portion of a system-on-a-chip (SoC) and be incorporated, along with the processor 140, the memory 146, and other components of the computing node 104, on a single integrated circuit chip. The data storage device 148 may be embodied as any type of device or devices configured for short-term or long-term storage of data such as, for example, memory devices and circuits, memory cards, hard disk drives, solid-state drives, or other data storage devices.

The communication circuitry 150 of the computing node 104 may be embodied as any communication interface, such as a communication circuit, device, or collection thereof, capable of enabling communications between the computing node 104 and one or more remote computing nodes 104, managed network devices 102, switches, remote hosts, or other devices. The communication circuitry 150 may be configured to use any one or more communication technology (e.g., wired or wireless communications) and associated protocols (e.g., Intel^{®} Omni-Path Architecture, InfiniBand^{®}, Ethernet, Bluetooth^{®}, Wi-Fi^{®}, WiMAX, etc.) to effect such communication. In particular, the communication circuitry 150 includes a port 152 that connects to a fabric link 106. Although illustrated as including a single port 152, in some embodiments each computing node 104 may include multiple ports 152.

Each of the fabric links 106 may be embodied as any point-to-point communication link capable of connecting two ports 120, 152 of the system 100. For example, a fabric link 106 may connect a port 152 of a computing node 104 with a port 120 of a managed network device 102, may connect two ports 120 of two managed network devices 102, and so on. Each fabric link 106 allows communications in both directions. Each fabric link 106 may be embodied as a serial data communication link such as a copper cable, copper backplane, fiber optic cable, or silicon photonics link, and may include multiple communication lanes (e.g., four lanes) to increase total bandwidth. Each fabric link 106 may signal data at a wire speed such as 12.5 Gb/s or 25.78125 Gb/s.

The fabric manager 108 is configured to initialize and otherwise manage the managed network devices 102, computing nodes 104, and other hosts, gateways, and/or other devices of the system 100. The fabric manager 108 may be embodied as any type of server computing device, network device, or collection of devices, capable of performing the functions described herein. In some embodiments, the system 100 may include multiple fabric managers 108 of which a primary fabric manager 108 may be selected. As such, the fabric manager 108 may be embodied as a single server computing device or a collection of servers and associated devices. Accordingly, although the fabric manager 108 is illustrated in FIG. 1 as embodied as a single computing device, it should be appreciated that the fabric manager 108 may be embodied as multiple devices cooperating together to facilitate the functionality described below.

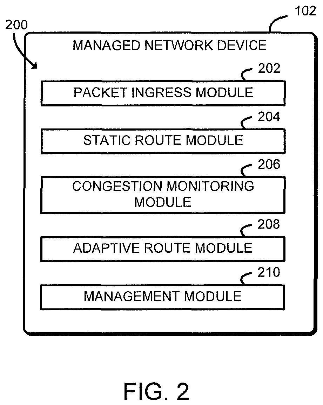

Referring now to FIG. 2, in an illustrative embodiment, each managed network device 102 establishes an environment 200 during operation. The illustrative environment 200 includes a packet ingress module 202, a static route module 204, a congestion monitoring module 206, an adaptive route module 208, and a management module 210. The various modules of the environment 200 may be embodied as hardware, firmware, software, or a combination thereof. For example the various modules, logic, and other components of the environment 200 may form a portion of, or otherwise be established by, the switch logic 122, the management logic 124, or other hardware components of the managed network device 102. As such, in some embodiments, any one or more of the modules of the environment 200 may be embodied as a circuit or collection of electrical devices (e.g., a packet ingress circuit, a static route circuit, etc.).

The packet ingress module 202 is configured to receive and process data packets from the ports 120. In particular, the packet ingress module 202 is configured to extract a destination local identifier (DLID) from a received data packet. The DLID may be embodied as a binary value having a configurable length (e.g., 32, 24, 20, or 16 bits wide, or any other appropriate width). The DLID identifies the destination end point (e.g., a destination computing node 104) of the data packet.

The static route module 204 is configured to determine a statically routed destination port 120 of the managed network device 102 as a function of the DLID. The static route module 204 may, for example, look up the destination port 120 in a forwarding table using the DLID. The static route module 204 may be configured to forward the data packet to the statically routed destination port 120 if that destination port 120 is not congested.

The congestion monitoring module 206 is configured to determine whether the statically routed destination port 120 is congested. The congestion monitoring module 206 may use any appropriate congestion metric or other monitoring technique to determine whether the destination port 120 is congested. In some embodiments, the congestion monitoring module 206 may determine whether a particular subdivision of fabric link 106 for the destination port 120 is congested (e.g., a particular virtual lane, service channel, or associated service level).

The adaptive route module 208 is configured to determine a port group based on the DLID. Each port group identifies two or more ports 120 of the managed network device 102. Port groups may overlap, and each DLID is associated with exactly one port group. The adaptive route module 208 is further configured to dynamically select a destination port 120 of the port group when the statically routed destination port 120 is congested and then forward the data packet to dynamically selected destination port 120. The adaptive route module 208 may use any one or more strategies for selecting the destination port 120 (e.g., random selection, greedy/least-loaded selection, and/or greedy random selection).

The management module 210 is configured to manage the configuration of the managed network device 102. The management module 210 may store or otherwise manage one or more configuration registers, data tables, or other management information that may be used to configure the managed network device 102. For example, in some embodiments, the management module 210 may manage a linear forwarding table, a multicast forwarding table, a port group forwarding table, and/or a port group table. The management module 210 may be configured to receive commands, data, and other management information from the fabric manager 108.

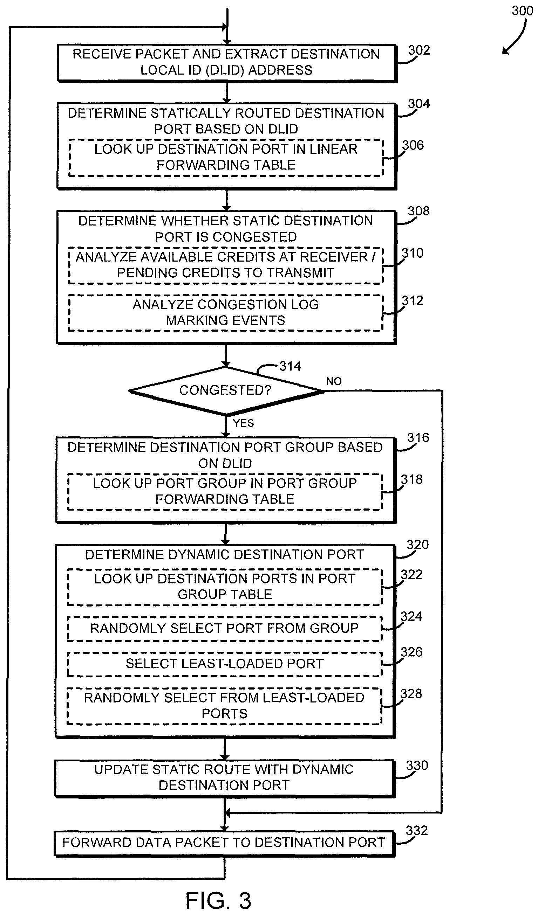

Referring now to FIG. 3, in use, a managed network device 102 may execute a method 300 for medium grained adaptive routing. The method 300 begins in block 302, in which the managed network device 102 receives a data packet on a port 120 and extracts a destination local identifier (DLID) from the data packet. The DLID identifies the destination of the data packet (e.g., the destination computing node 104). The data packet may be embodied as any appropriate collection of binary data including the DLID. The DLID may be embodied as a binary value having a configurable length (e.g., 32, 24, 20, or 16 bits). The managed network device 102 may be configured to extract the correctly sized DLID, for example by the fabric manager 108. The width of the DLID may be configured globally for the managed network device 102 and/or on a per-port 120 basis. In some embodiments, a subset of possible DLIDs may be assigned to a multicast and/or collective address space, and certain DLIDs may have predetermined meanings (e.g., an uninitialized address or a permissive LID). Those DLIDs may be processed using dedicated multicast, collective, or other operations, which are not shown in the method 300 for clarity.

In block 304, the managed network device 102 determines the statically routed destination port 120 based on the DLID. The statically-routed destination port 120 may be a predetermined destination port 120 of the managed network device 102 that has been associated with the DLID. The managed network device 102 may look up the statically routed destination port 120 in one or more data tables. Those data tables may be configured or otherwise maintained by the fabric manager 108. In some embodiments, in block 306 the managed network device 102 may look up the destination port 120 in a linear forwarding table. The managed network device 102 may use the DLID as an index into the linear forwarding table and retrieve a port number or other data identifying the destination port 120.

In block 308, the managed network device 102 determines whether the statically routed destination port 120 is congested. The destination port 120 may be congested if the offered load on that port 120 exceeds the ejection rate of the receiver on the other side of the fabric link 106 (e.g., the receiving managed network device 102 or computing node 104). The managed network device 102 may use any monitoring technique to determine whether the destination port 120 is congested. For example, the managed network device 102 may use a congestion control agent, monitor for congestion notices received from remote devices, analyze flow control data, or perform any other appropriate monitoring. The managed network device 102 may determine whether the destination port 120 is congested on a per virtual lane basis, per service channel basis, per service level basis, or based on any other logical or physical subdivision of the fabric link 106. In some embodiments, in block 310 the managed network device 102 analyzes available flow control credits at the receiver and pending flow control credits to be transmitted by the managed network device 102. If flow control credits are not available at the receiver or pending flow control credits of the managed network device 102 are increasing, then the destination port 120 may be congested. In some embodiments, in block 312 the managed network device 102 may analyze a congestion log for congestion marking events. In some embodiments, in response to detecting congestion, the managed network device 102 may send a Forward Explicit Congestion Notification (FECN) to the receiver when congestion is detected, for example, by setting an FECN bit on data packets exiting the managed network device 102. When marking a data packet with the FECN bit, the managed network device 102 may also record that marking event in the congestion log.

In block 314, the managed network device 102 determines whether the statically routed destination port 120 is congested. If not, the method 300 branches ahead to block 332, described below. If the statically routed destination port 120 is congested, the method 300 advances to block 316.

In block 316, the managed network device 102 determines a destination port group based on the DLID. The destination port group may be identified as a collection of any two or more destination ports 120 of the managed network device 102. Destination port groups may overlap, meaning that a port 120 may be included in more than one port group. As further described below, each port group may map to one or more DLIDs, and each DLID is associated with exactly one port group. The fabric manager 108 may discover routes through the fabric and then configure the port groups and port group mappings accordingly. When there is only one possible path through the fabric for a particular DLID (e.g., a single destination port 120), that DLID may be assigned to an undefined port group (e.g., an empty set, null value, zero value, etc.).

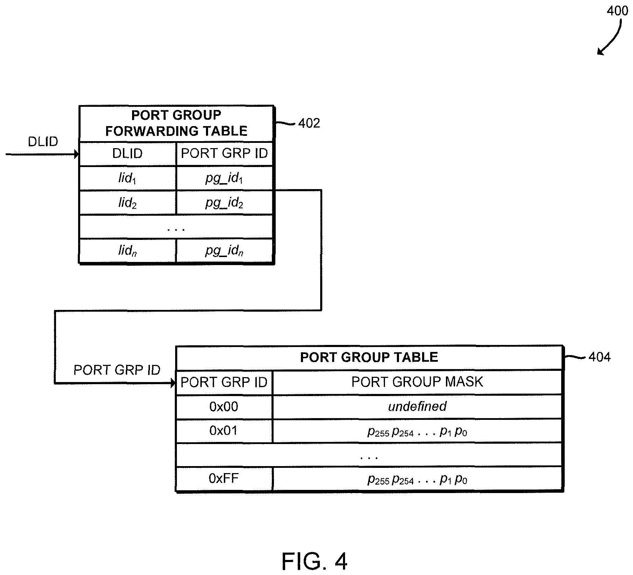

In some embodiments, in block 318, the managed network device 102 may look up the port group in a port group forwarding table. For example, the managed network device 102 may index the port group forwarding table using the DLID to identify the unique port group identifier of the destination port group. The port group forwarding table may have a similar structure to the linear forwarding table, and may be accessed or otherwise maintained by the fabric manger 108 similarly to the linear forwarding table. Referring now to FIG. 4, a schematic diagram 400 illustrates one potential embodiment of a port group forwarding table 402. In the illustrative embodiment, the table 402 may be indexed by a DLID *lidᵢ* to generate the corresponding port group identifier *pg_idᵢ.* Thus, in the illustrative embodiment, each DLID may be used to retrieve exactly one port group identifier, but each port group identifier may referenced by more than one DLID. Each DLID may be embodied as, for example, a 16-bit binary value, and each port group identifier may be embodied as an eight-bit binary value. The undefined port group may have the port group identifier zero (0x00), and valid port groups may have identifiers from one to 255 (0x01 to 0xFF). In some embodiments, the managed network device 102 may support less than the potential maximum of 255 port groups; however, in many embodiments the managed network device 102 may support at least twice as many port groups as the managed network device 102 has ports 120.

Referring back to FIG. 3, in block 320, the managed network device 102 determines a dynamic destination port 120 from the port group associated with the DLID. The managed network device 102 may use any strategy for selecting the dynamic destination port 120. In some embodiments, the managed network device 102 may ensure that the dynamic destination port 120 is not the same as the statically routed destination port 120, to avoid congestion. In some embodiments, the managed network device 102 may look up the destination ports 120 in a port group table. For example, the managed network device 102 may index the port group table using the port group identifier to identify a port mask associated with the port group. The port mask may be embodied as a bitmask or other data identifying the destination ports 120 of the managed network device 102 included in the port group. The port group table and port mask entries may have a similar structure to a multicast forwarding table, and may be accessed or otherwise maintained by the fabric manger 108 similarly to the multicast forwarding table. Referring again to FIG. 4, the schematic diagram 400 illustrates one potential embodiment of a port group table 404. As shown, the port group identifier retrieved from the port group forwarding table 402 may be used to index the port group table 404. In the illustrative embodiment, the port group identifier may be embodied as an eight-bit value. The identifier zero (0x00) maps to the undefined port group. Valid port group identifiers one through 255 (0x01 through 0xFF) each map to a port mask, which is illustrated as a 256-bit bitmask *p*₂₅₅ *p*₂₅₄ ... *p*₁ *p*₀. Each bit *pᵢ* of the port mask corresponds to a destination port 120 of the managed network device 102. Thus, each the ports 120 included in each port group may correspond to the bits set in the associated port mask. Bits of the bitmask beyond the number of ports 120 in the managed network device 102 may be ignored on write and read back as zero, or may be otherwise disregarded. Although illustrated as a 256-bit bitmap, it should be understood that the port masks may include any appropriate amount of data.

Referring back to FIG. 3, as described above, the managed network device 102 may use any strategy for selecting the destination port 120 from the port group. In some embodiments, in block 324 the managed network device 102 may randomly select a destination port 120 from the port group. In some embodiments, in block 326, the managed network device 102 may select the least-loaded destination port 120 from the port group. The managed network device 102 may use any appropriate metric to determine the least-loaded port 120, for example selecting the destination port 120 with the smallest queue occupancy/depth, the least congestion, or otherwise least-loaded. In some embodiments, in block 328, the managed network device 102 may randomly select from two or more of the least-loaded ports 120 of the port group.

In block 330, the managed network device 102 updates the static routing information with the dynamic destination port 120. The managed network device 102 may, for example, replace the entry for the statically routed destination port 120 in the linear forwarding table with the dynamically determined destination port 120.

In block 332, the managed network device 102 forwards the data packet to the destination port 120. The managed network device 102 may, for example, forward the data packet to the destination port 120 described in the linear forwarding table. As described above, the destination port 120 described in the linear forwarding table may be the statically routed destination port 120 determined as described above in block 304 if that port 120 is not congested, or the dynamically determined destination port 120 as described above in connection with block 320. After forwarding the data packet to the destination port 120, the method 300 loops back to block 302 to continue processing data packets. Although the method of 300 of FIG. 3 is illustrated as executing sequentially, it should be understood that in some embodiments, the managed network device 102 may perform the operations of the method 300 in parallel, simultaneously, or in any other order. For example, in some embodiments operations may be performed in parallel by hardware resources of the managed network device 102.

## Claims

1. A network device (102) for data packet forwarding, the network device comprising:
a packet ingress module (202) operable to receive a data packet having a destination local identifier, DLID, identifying a destination node of the data packet and to extract the DLID from the data packet;
a static route module (204) operable to determine a statically routed destination port (120) of the network device as a function of the DLID;
a congestion monitoring module (206) operable to determine whether the statically routed destination port (120) is congested;
a management module (210) operable to receive commands, data and other management information from a fabric manager (108), the management module being operable to manage a port group forwarding table (402) and a port group table (404) that are configured by the fabric manager (108); and
an adaptive route module (208) operable to:
determine a port group as a function of the DLID in response to a determination that the statically routed destination port is congested, wherein the port group identifies two or more ports of the network device, wherein to determine the port group as a function of the DLID comprises to index the port group forwarding table (402) with the DLID to determine a port group identifier;
select a dynamic destination port (120) of the port group in response to the determination that the statically routed destination port is congested, wherein to select the dynamic destination port (120) of the port group comprises to
index the port group table (404) with the port group identifier to determine a port group mask, wherein the port group mask is indicative of a plurality of valid destination ports for the DLID, and
select the dynamic destination port (120) from the plurality of valid destination ports of the port group mask; and
forward the data packet to the dynamic destination port (120) in response to the determination that the statically routed destination port (120) is congested.

2. The network device of claim 1, wherein to determine whether the statically routed destination port (120) is congested comprises to analyze available flow control credits associated with the destination port.

3. The network device of claim 1, wherein to determine whether the statically routed destination port (120) is congested comprises to analyze a congestion log associated with the destination port.

4. The network device of claim 1, wherein to select the dynamic destination port (120) from the plurality of valid destination ports comprises to randomly select the dynamic destination port (120) from the plurality of valid destination ports.

5. The network device of claim 1, wherein to select the dynamic destination port (120) from the plurality of valid destination ports comprises to select a least-loaded destination port of the plurality of valid destination ports as the dynamic destination port (120).

6. The network device of claim 1, wherein to select the dynamic destination port (120) from the plurality of valid destination ports comprises to randomly select the dynamic destination port (120) from a plurality of least-loaded destination ports of the plurality of valid destination ports.

7. A method for adaptive data packet routing, the method comprising:
managing, by a management module (210) of a network device (102), a port group forwarding table (402) and a port group table (404), wherein the management module receives commands, data and other management information from a fabric manager (108) that configures the port group forwarding table (402) and the port group table (404);
receiving (302), by the network device, a data packet having a destination local identifier, DLID, identifying a destination node of the data packet and extracting the DLID from the data packet;
determining (304), by the network device, a statically routed destination port (120) of the network device as a function of the DLID;
determining (308), by the network device, whether the statically routed destination port (120) is congested;
determining (316), by the network device, a port group as a function of the DLID in response to determining the statically routed destination port (120) is congested, wherein the port group identifies two or more ports of the network device, wherein determining the port group as a function of the DLID comprises indexing (318) a port group forwarding table (402) with the DLID to determine the port group identifier;
selecting (324, 326), by the network device, a dynamic destination port (120) of the port group in response to determining the statically routed destination port (120) is congested, wherein selecting the dynamic destination port (120) of the port group comprises
indexing a port group table (404) with the port group identifier to determine a port group mask, wherein the port group mask is indicative of a plurality of valid destination ports for the DLID, and
selecting the dynamic destination port from the plurality of valid destination ports of the port group mask; and
forwarding (332), by the network device, the data packet to the dynamic destination port (120) in response to determining the statically routed destination port is congested.

8. The method of claim 7, wherein selecting the dynamic destination port (120) from the plurality of valid destination ports comprises randomly selecting the dynamic destination port (120) from the plurality of valid destination ports.

9. The method of claim 7, wherein selecting the dynamic destination port (120) from the plurality of valid destination ports comprises selecting a least-loaded destination port of the plurality of valid destination ports as the dynamic destination port (120).

10. The method of claim 7, wherein selecting the dynamic destination port (120) from the plurality of valid destination ports comprises randomly selecting the dynamic destination port (120) from a plurality of least-loaded destination ports of the plurality of valid destination ports.

11. One or more machine readable storage media comprising a plurality of instructions stored thereon that in response to being executed result in a computing device performing the method of any of claims 7-10.

## Patentansprüche

1. Netzwerkvorrichtung (102) für Datenpaket-Weiterleitung, die Netzwerkvorrichtung umfassend:
ein Paketeingangsmodul (202), funktionsfähig zum Empfangen eines Datenpakets mit einer Bestimmungsortkennung, DLID, die einen Bestimmungsknoten des Datenpakets identifiziert, und zum Extrahieren der DLID aus dem Datenpaket;
ein statisches Leitwegmodul (204), funktionsfähig zum Bestimmen eines statisch geleiteten Bestimmungsanschlusses (120) der Netzwerkvorrichtung als eine Funktion der DLID;
ein Überlastungsüberwachungsmodul (206), funktionsfähig zum Bestimmen, ob der statisch geleitete Bestimmungsanschluss (120) überlastet ist;
ein Verwaltungsmodul (210), funktionsfähig zum Empfangen von Befehlen, Daten und anderen Verwaltungsinformationen von einer Gefüge-Verwaltungsvorrichtung (108), wobei das Verwaltungsmodul funktionsfähig ist zum Verwalten einer Anschlussgruppen-Weiterleitungstabelle (402) und einer Anschlussgruppentabelle (404), die durch die Gefüge-Verwaltungsvorrichtung (108) konfiguriert werden; und
ein adaptives Leitwegmodul (208), funktionsfähig zum:
Bestimmen einer Anschlussgruppe als eine Funktion der DLID als Reaktion auf eine Bestimmung, dass der statisch geleitete Bestimmungsanschluss überlastet ist, wobei die Anschlussgruppe zwei oder mehr Anschlüsse der Netzwerkvorrichtung identifiziert, wobei Bestimmen der Anschlussgruppe als eine Funktion der DLID umfasst, die Anschlussgruppen-Weiterleitungstabelle (402) mit der DLID zu indexieren, um eine Anschlussgruppenkennung zu bestimmen;
Auswählen eines dynamischen Bestimmungsanschlusseses (120) der Anschlussgruppe als Reaktion auf die Bestimmung, dass der statisch geleitete Bestimmungsanschluss überlastet ist, wobei das Auswählen des dynamischen Bestimmungsanschlusseses (120) der Anschlussgruppe umfasst
Indexieren der Anschlussgruppentabelle (404) mit der Anschlussgruppenkennung zum Bestimmen einer Anschlussgruppenmaske, wobei die Anschlussgruppenmaske eine Vielzahl von gültigen Bestimmungsanschlüssen für die DLID angibt, und
Auswählen des dynamischen Bestimmungsanschlusses (120) aus der Vielzahl von gültigen Bestimmungsanschlüssen der Anschlussgruppenmaske; und
Weiterleiten des Datenpakets zu dem dynamischen Bestimmungsanschluss (120) als Reaktion auf die Bestimmung, dass der statisch geleitete Bestimmungsanschluss (120) überlastet ist.

2. Netzwerkvorrichtung nach Anspruch 1, wobei das Bestimmen, ob der statisch geleitete Bestimmungsanschluss (120) überlastet ist, umfasst, verfügbare, mit dem Bestimmungsanschluss assoziierte Flusssteuerungsguthaben zu analysieren.

3. Netzwerkvorrichtung nach Anspruch 1, wobei das Bestimmen, ob der statisch geleitete Bestimmungsanschluss (120) überlastet ist, umfasst, ein mit dem Bestimmungsanschluss assoziiertes Überlastungsprotokoll zu analysieren.

4. Netzwerkvorrichtung nach Anspruch 1, wobei das Auswählen des dynamischen Bestimmungsanschlusses (120) aus der Vielzahl von gültigen Bestimmungsanschlüssen umfasst, den dynamischen Bestimmungsanschluss (120) aus der Vielzahl von gültigen Bestimmungsanschlüssen zufällig auszuwählen.

5. Netzwerkvorrichtung nach Anspruch 1, wobei das Auswählen des dynamischen Bestimmungsanschlusses (120) aus der Vielzahl von gültigen Bestimmungsanschlüssen umfasst, einen am wenigsten belasteten Bestimmungsanschluss der Vielzahl von gültigen Bestimmungsanschlüssen als den dynamischen Bestimmungsanschluss (120) auszuwählen.

6. Netzwerkvorrichtung nach Anspruch 1, wobei das Auswählen des dynamischen Bestimmungsanschlusses (120) aus der Vielzahl von gültigen Bestimmungsanschlüssen umfasst, den dynamischen Bestimmungsanschluss (120) aus einer Vielzahl von am wenigsten belasteten Bestimmungsanschlüssen der Vielzahl von gültigen Bestimmungsanschlüssen zufällig auszuwählen.

7. Verfahren für adaptive Datenpaketleitung, das Verfahren umfassend:
Verwalten, durch ein Verwaltungsmodul (210) einer Netzwerkvorrichtung (102), einer Anschlussgruppen-Weiterleitungstabelle (402) und einer Anschlussgruppentabelle (404), wobei das Verwaltungsmodul Befehle, Daten und andere Verwaltungsinformationen von einer Gefüge-Verwaltungsvorrichtung (108), die die Anschlussgruppen-Weiterleitungstabelle (402) und die Anschlussgruppentabelle (404) konfiguriert, empfängt;
Empfangen (302), durch die Netzwerkvorrichtung, eines Datenpakets mit einer Bestimmungsortkennung, DLID, die einen Bestimmungsknoten des Datenpakets identifiziert, und Extrahieren der DLID aus dem Datenpaket;
Bestimmen (304), durch die Netzwerkvorrichtung, eines statisch geleiteten Bestimmungsanschlusses (120) der Netzwerkvorrichtung als eine Funktion der DLID;
Bestimmen (308), durch die Netzwerkvorrichtung, ob der statisch geleitete Bestimmungsanschluss (120) überlastet ist;
Bestimmen (316), durch die Netzwerkvorrichtung, einer Anschlussgruppe als eine Funktion der DLID als Reaktion auf Bestimmen, dass der statisch geleitete Bestimmungsanschluss (120) überlastet ist, wobei die Anschlussgruppe zwei oder mehr Anschlüsse der Netzwerkvorrichtung identifiziert, wobei Bestimmen der Anschlussgruppe als eine Funktion der DLID umfasst, eine Anschlussgruppen-Weiterleitungstabelle (402) mit der DLID zum Bestimmen der Anschlussgruppenkennung zu indexieren (318);
Auswählen (324, 326), durch die Netzwerkvorrichtung, eines dynamischen Bestimmungsanschlusses (120) der Anschlussgruppe als Reaktion auf Bestimmen, dass der statisch geleitete Bestimmungsanschluss (120) überlastet ist, wobei Auswählen des dynamischen Bestimmungsanschlusses (120) der Anschlussgruppe umfasst
Indexieren einer Anschlussgruppentabelle (404) mit der Anschlussgruppenkennung zum Bestimmen einer Anschlussgruppenmaske, wobei die Anschlussgruppenmaske eine Vielzahl von gültigen Bestimmungsanschlüssen für die DLID angibt, und
Auswählen des dynamischen Bestimmungsanschlusses aus der Vielzahl von gültigen Bestimmungsanschlüssen der Anschlussgruppenmaske; und
Weiterleiten (332), durch die Netzwerkvorrichtung, des Datenpakets zu dem dynamischen Bestimmungsanschluss (120) als Reaktion auf Bestimmen, dass der statisch geleitete Bestimmungsanschluss überlastet ist.

8. Verfahren nach Anspruch 7, wobei Auswählen des dynamischen Bestimmungsanschlusses (120) aus der Vielzahl von gültigen Bestimmungsanschlüssen umfasst, den dynamischen Bestimmungsanschluss (120) aus der Vielzahl von gültigen Bestimmungsanschlüssen zufällig auszuwählen.

9. Verfahren nach Anspruch 7, wobei Auswählen des dynamischen Bestimmungsanschlusses (120) aus der Vielzahl von gültigen Bestimmungsanschlüssen umfasst, einen am wenigsten belastetes Bestimmungsanschluss der Vielzahl von gültigen Bestimmungsanschlüssen als den dynamischen Bestimmungsanschluss (120) auszuwählen.

10. Verfahren nach Anspruch 7, wobei Auswählen des dynamischen Bestimmungsanschlusses (120) aus der Vielzahl von gültigen Bestimmungsanschlüssen umfasst, den dynamischen Bestimmungsanschluss (120) aus einer Vielzahl von am wenigsten belasteten Bestimmungsanschlüssen der Vielzahl von gültigen Bestimmungsanschlüssen zufällig auszuwählen.

11. Ein oder mehrere maschinenlesbare Speichermedien, umfassend eine Vielzahl von darin gespeicherten Anweisungen, die als Reaktion darauf, dass sie in einer Berechnungsvorrichtung ausgeführt werden, das Verfahren nach einem der Ansprüche 7-10 durchführen.

## Revendications

1. Dispositif de réseau (102) destiné à l'acheminement de paquets de données, le dispositif de réseau comprenant :
un module d'entrée de paquets (202) utilisable pour recevoir un paquet de données ayant un identifiant local de destination, DLID, identifiant un noeud de destination du paquet de données et pour extraire le DLID du paquet de données ;
un module de routage statique (204) utilisable pour déterminer un port de destination routé de manière statique (120) du dispositif de réseau en fonction de l'identifiant DLID ;
un module de surveillance d'encombrement (206) utilisable pour déterminer si le port de destination routé de manière statique (120) est encombré ;
un module de gestion (210) utilisable pour recevoir des commandes, des données et d'autres informations de gestion d'un gestionnaire de réseau (108), le module de gestion étant utilisable pour gérer une table d'acheminement de groupes de ports (402) et une table de groupes de ports (404) qui sont configurées par le gestionnaire de matrice (108) ; et
un module de routage adaptatif (208) utilisable pour :
déterminer un groupe de ports en fonction du DLID en réponse à la détermination que le port de destination routé de manière statique est encombré, où le groupe de ports identifie deux ports, ou davantage, du dispositif de réseau, où déterminer le groupe de ports en fonction du DLID comprend d'indexer la table d'acheminement de groupes de ports (402) avec le DLID pour déterminer un identifiant de groupe de ports ;
sélectionner un port de destination dynamique (120) du groupe de ports en réponse à la détermination que le port de destination routé de manière statique est encombré, où sélectionner le port de destination dynamique (120) du groupe de ports comprend :
l'indexation d'une table de groupes de ports (404) avec l'identifiant de groupe de ports pour déterminer un masque de groupe de ports, où le masque de groupe de ports est indicatif d'une pluralité de ports de destination valides pour le DLID, et
la sélection du port de destination dynamique parmi la pluralité de ports de destination valides du masque de groupe de ports ; et
acheminer le paquet de données au port de destination dynamique (120) en réponse à la détermination que le port de destination routé de manière statique (120) est encombré.

2. Dispositif de réseau selon la revendication 1, dans lequel déterminer si le port de destination routé de manière statique (120) est encombré comprend d'analyser des crédits de contrôle de flux disponibles associés au port de destination.

3. Dispositif de réseau selon la revendication 1, dans lequel déterminer si le port de destination routé de manière statique (120) est encombré comprend d'analyser un journal d'encombrement associé au port de destination.

4. Dispositif de réseau selon la revendication 1, dans lequel la sélection du port de destination dynamique (120) parmi la pluralité de ports de destination valides comprend de sélectionner de manière aléatoire le port de destination dynamique (120) parmi la pluralité de ports de destination valides.

5. Dispositif de réseau selon la revendication 1, dans lequel la sélection du port de destination dynamique (120) parmi la pluralité de ports de destination valides comprend de sélectionner le port de destination le moins chargé de la pluralité de ports de destination valides en tant que port de destination dynamique (120).

6. Dispositif de réseau selon la revendication 1, dans lequel la sélection du port de destination dynamique (120) parmi la pluralité de ports de destination valides comprend de sélectionner de manière aléatoire le port de destination dynamique (120) parmi une pluralité de ports de destination les moins chargés de la pluralité de ports de destination valides.

7. Procédé de routage adaptatif de paquets de données, le procédé comprenant les étapes suivantes :
gérer, par un module de gestion (210) d'un dispositif de réseau (102), une table d'acheminement de groupes de ports (402) et une table de groupes de ports (404), où le module de gestion reçoit des commandes, des données et d'autres informations de gestion d'un gestionnaire de matrice (108) qui configure la table d'acheminement de groupes de ports (402) et la table de groupes de ports (404) ;
recevoir (302), par le dispositif de réseau, un paquet de données ayant un identifiant local de destination, DLID, identifiant un noeud de destination du paquet de données et extraire le DLID du paquet de données ;
déterminer (304), par le dispositif de réseau, un port de destination routé de manière statique (120) du dispositif de réseau en fonction du DLID ;
déterminer (308), par le dispositif de réseau, si le port de destination routé de manière statique (120) est encombré ;
déterminer (316), par le dispositif de réseau, un groupe de ports en fonction du DLID en réponse à la détermination que le port de destination routé de manière statique (120) est encombré, où le groupe de ports identifie deux ports, ou davantage, du dispositif de réseau, où la détermination du groupe de ports en fonction du DLID comprend d'indexer (318) une table d'acheminement de groupes de ports (402) avec le DLID pour déterminer l'identifiant de groupe de ports ;
sélectionner (324, 326), par le dispositif de réseau, un port de destination dynamique (120) du groupe de ports en réponse à la détermination que le port de destination routé de manière statique (120) est encombré, où la sélection du port de destination dynamique (120) du groupe de ports comprend :
l'indexation d'une table de groupes de ports (404) avec l'identifiant de groupe de ports pour déterminer un masque de groupe de ports, où le masque de groupe de ports est indicatif d'une pluralité de ports de destination valides pour le DLID, et
la sélection du port de destination dynamique parmi la pluralité de ports de destination valides du masque de groupe de ports ; et
acheminer (332), par le dispositif de réseau, le paquet de données au port de destination dynamique (120) en réponse à la détermination que le port de destination routé de manière statique est encombré.

8. Procédé selon la revendication 7, dans lequel la sélection du port de destination dynamique (120) parmi la pluralité de ports de destination valides comprend de sélectionner de manière aléatoire le port de destination dynamique (120) parmi la pluralité de ports de destination valides.

9. Procédé selon la revendication 7, dans lequel la sélection du port de destination dynamique (120) parmi la pluralité de ports de destination valides comprend de sélectionner le port de destination le moins chargé de la pluralité de ports de destination valides en tant que port de destination dynamique (120).

10. Procédé selon la revendication 7, dans lequel la sélection du port de destination dynamique (120) parmi la pluralité de ports de destination valides comprend de sélectionner de manière aléatoire le port de destination dynamique (120) parmi une pluralité de ports de destination les moins chargés de la pluralité de ports de destination valides.

11. Un ou plusieurs supports de stockage lisibles par machine comprenant une pluralité d'instructions y étant stockées qui, en réponse à leur exécution, conduisent un dispositif informatique à exécuter le procédé selon l'une quelconque des revendications 7 à 10.
